# EUROPEAN PATENT SPECIFICATION

(11) **EP 4 184 831 B1**
(45) Date of publication and mention of the grant of the patent: **28.01.2026**
(21) Application number: 20948320.5
(22) Date of filing: 06.08.2020
(51) Int. Cl.: H04L 12/403, H04L 12/40

(54) **DATA COLLECTION METHOD AND APPARATUS, MODBUS SYSTEM, AND STORAGE MEDIUM**
DATENSAMMELVERFAHREN UND -VORRICHTUNG, MODBUS-SYSTEM UND SPEICHERMEDIUM
PROCÉDÉ ET APPAREIL DE COLLECTE DE DONNÉES, SYSTÈME MODBUS ET SUPPORT DE STOCKAGE

(43) Date of publication of application: 24.05.2023
(73) Proprietor: Huawei Digital Power Technologies Co., Ltd., Shenzhen, Guangdong 518043 (CN)
(72) Inventor: HU, Shuyan, Shenzhen, Guangdong 518129 (CN); YANG, Xiaohui, Shenzhen, Guangdong 518129 (CN); ZHANG, Zhao, Shenzhen, Guangdong 518129 (CN)
(74) Representative: Isarpatent
(86) International application number: PCT/CN2020/107513
(87) International publication number: WO 2022/027480

(56) References cited:
- CN-A- 101 227 348
- CN-A- 102 820 959
- CN-A- 106 027 686
- CN-B- 104 158 699
- US-A1- 2008 235 346
- ANONYMOUS: "Modbus - Wikipedia - Version of 16 July 2020", 16 July 2020 (2020-07-16), XP093065615, Retrieved from the Internet <URL:https://en.wikipedia.org/w/index.php?title=Modbus&oldid=967922605> [retrieved on 20230720]
- MODBUS ORG ET AL: "MODBUS over serial line specification and implementation guide V1.02 MODBUS over Serial Line Specification and Implementation Guide Modbus.org", 20 December 2006 (2006-12-20), XP055599399, Retrieved from the Internet <URL:http://www.modbus.org/docs/Modbus_over_serial_line_V1_02.pdf> [retrieved on 20230720]
- ANONYMOUS: "MODBUS APPLICATION PROTOCOL SPECIFICATION", MODBUS-IDA, vol. 1.1b, 26 April 2012 (2012-04-26), XP055553597

## Description

### TECHNICAL FIELD

Embodiments of this application relate to the field of communication technologies, and in particular, to a data collection method and apparatus, a Modbus system, and a storage medium.

### BACKGROUND

The document "Modbus - Wikipedia - Version of 16 July 2020", (Anonymous), URL: https://en.wikipedia.org/w/index.php?title=Modbus&oldid=967922605 describes a Wikipedia entry on the Modbus standard.

The document "MODBUS over serial line specification and implementation guide V1.02 MODBUS over Serial Line Specification and Implementation Guide Modbus.org", Modbus Org ET AL, URL: http://www.modbus.org/docs/Modbus_over_serial_line_V1_02.pdf, describes the conventional Modbus specification as of December 2006.

The document "MODBUS APPLICATION PROTOCOL SPECIFICATION", MODBUS-IDA, (20120426), vol. 1.1b, describes in Chapter "4 General description" describes the conventional Modbus transmission scheme.

A Modbus protocol is a serial line communication protocol, has become an industry standard of communication protocol in the industrial field, and is a common communication mode between industrial electronic devices. A Modbus system includes one master and a plurality of slaves. The master is responsible for collecting data of each slave.

In a related technology, the Modbus standard protocol specifies that data collection is implemented by exchanging a Modbus packet between a master and a slave. A maximum length of one Modbus packet is 256 bytes, and a maximum length of a data field is 252 bytes, that is, there is a limited amount of data carried in the data field included in one Modbus packet. For example, a length of one piece of collected data is 1 byte, and a maximum amount of data carried in a data field is 252. Due to a limitation of the length of the data field, if there is a large amount of data to be collected on a slave, a plurality of requests and responses are required between the master and the slave to collect all the data of the slave.

It can be learned from the foregoing that in the related technology, there is a problem of occupying a bus resource for a long time by the slave if there is a large amount of data to be collected on the slave. In addition, the slave needs to respond for a plurality of times for collection, but valid data that the slave responds with each time is limited. Consequently, a bus is occupied frequently but an occupation rate is not high. In addition, if the master consumes much time on one slave, real-time performance of the entire Modbus system is low.

### SUMMARY

The present invention provides provide a data collection method and apparatus, a Modbus system, and a storage medium with the features of the independent claims. Further advantageous embodiments are subject matter of the dependent claims. Hereinafter, before coming to a detailed description of the embodiments of the invention with reference to the attached drawings, some general aspects which are useful for contributing to the understanding of the inventive details in these embodiments are described below separately.

Embodiments of this application provide a data collection method and apparatus, a Modbus system, and a storage medium, so that in a process of collecting data by using the Modbus system, an occupation frequency of a bus can be reduced, an occupation rate can be increased, and system real-time performance can be improved. Technical solutions are as follows.

According to a first aspect, a data collection method is provided, where the data collection method is applied to a master included in a Modbus system, the Modbus system further includes a plurality of slaves, and the method includes:

The master sends a data request packet to a first slave, where the data request packet carries the one or more pieces of block collection indication information, each of the one or more pieces of block collection indication information is used to indicate data that needs to be collected by the master from the first slave, and the first slave is one of the plurality of slaves; and the master receives a data response packet sent by the first slave, where the data response packet carries one or more pieces of block data, the one or more pieces of block data are data provided by the first slave in response to the one or more pieces of block collection indication information, and an amount of data carried in each of the one or more pieces of block data is greater than 0 and is less than or equal to 256.

In an embodiment of this application, one or more pieces of block data can be collected at one-time interaction between the master and the slave, and a maximum amount of data carried in each piece of block data is 256. In the Modbus system, one piece of data is represented in a minimum of 1 byte. Assuming that one piece of data is represented by 1 byte, for example, one piece of coil data, the data carried in each piece of block data is a maximum of 256 bytes. Assuming that one piece of data is represented by 2 bytes, for example, one piece of register data, the data carried in each piece of block data is a maximum of 512 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved. That is, in this solution, a long data packet is exchanged between the master and the slave to improve communication efficiency and improve system real-time performance.

Furthermore, before the master sends a data request packet to a first slave, the method further includes: The master determines the one or more pieces of block collection indication information based on an address distribution feature of to-be-collected data of the first slave.

It should be noted that, in this embodiment of this application, addresses of the to-be-collected data of the first slave may be continuous or discontinuous, for example, register addresses are continuous or discontinuous. The master determines the block collection indication information based on the address distribution feature, so that more valid data can be collected to a maximum extent, and it can be avoided that there is some invalid data in data collected by the master when the addresses are discontinuous.

Each of the one or more pieces of block collection indication information includes one start address and one data amount. Each of the one or more pieces of block data includes one start address, one data amount, and first data, and the first data is data that is read by the first slave based on corresponding block collection indication information.

Furthermore, in this embodiment of this application, a Modbus packet is extended to obtain the data request packet and the data response packet. That is, the data request packet includes a first address field, a first function field, and a first data field, the first address field carries an address of the first slave, the first function field carries a first function code, the first data field carries the one or more pieces of block collection indication information, and the first function code is used to indicate the master to request the first slave to execute a data collection function. The data response packet includes a second address field, a second function field, and a second data field, the second address field carries the address of the first slave, the second function field carries a second function code, the second data field carries the one or more pieces of block data, and the second function code is used to indicate a function actually executed by the first slave.

To improve reliability of communication between the master and the slave and resolve a problem of abnormal frame matching between both the master and the slave, optionally, in this embodiment of this application, the first data field further carries a first frame sequence number, the second data field further carries a second frame sequence number, and the first frame sequence number and the second frame sequence number are used by the master to perform frame matching between the data request packet and the data response packet. For example, that the first frame sequence number and the second frame sequence number are the same indicates that a corresponding data request packet and data response packet are frame-matched packets.

The first data field further carries a block request quantity, and the block request quantity is used to indicate a block quantity of data that the master requests the first slave to collect by block. The second data field further carries a block response quantity, and the block response quantity is used to indicate a block quantity of data actually collected by block by the first slave.

In this embodiment of this application, for the plurality of slaves included in the Modbus system, the master can flexibly set a collection duration for collecting data of each slave, to improve overall performance of the Modbus system, that is, ensure communication efficiency, communication quality, and system real-time performance.

The master sends a corresponding data request packet to each of the plurality of slaves at a same moment to complete one round of collection; or the master sequentially sends a corresponding data request packet to each of the plurality of slaves based on a polling sequence to complete one round of collection; or the master determines, based on a data amount of to-be-collected data of each of the plurality of slaves, a collection duration corresponding to a corresponding slave, and the master sends a corresponding data request packet to each of the plurality of slaves based on the collection duration corresponding to each slave of the plurality of slaves.

It should be noted that when the master simultaneously requests to collect data from all the slaves, the master does not need to wait for one slave to respond before requesting a next one. In this way, duration of one round of collection is greatly reduced, and time consumption is reduced. When the master sequentially requests, based on the polling sequence, to collect data from each slave, a one-question-to-one-answer manner is used between the master and the slave, which can ensure that the master successfully polls and collects the data of each slave in one round of collection. When the master requests to collect data based on the data amount of the to-be-collected data of each slave, the master more flexibly determines the collection duration corresponding to each slave. This can improve flexibility of the collection method and make full use of system resources, and avoid that some slaves have a busy answer service due to a large amount of data, while some other slaves have a small amount of data but the data cannot be collected for a long time.

Furthermore, the master determines a collection duration of a corresponding slave based on a real-time requirement of a service corresponding to each of the plurality of slaves. The master sends a corresponding data request packet to each of the plurality of slaves based on the collection duration corresponding to each of the plurality of slaves. In this way, the real-time requirement of the service corresponding to each slave can be met. To be specific, for a corresponding slave with a high real-time service, the master collects data of the corresponding slave at a high frequency, and for a corresponding slave with a low real-time service, the master collects data of the corresponding slave at a low frequency.

Furthermore, the master may determine a collection duration of a corresponding slave based on a data amount of to-be-collected data of each of the plurality of slaves and a real-time requirement of a service corresponding to each of the plurality of slaves. The master sends a corresponding data request packet to each of the plurality of slaves based on the collection duration corresponding to each slave of the plurality of slaves, to consider both a size of the data amount and the real-time requirement and improve overall performance of the Modbus system.

According to a second aspect, a data collection method is provided, where the data collection method is applied to a first slave included in a Modbus system, the first slave is one of a plurality of slaves included in the Modbus system, the Modbus system further includes a master, and the method includes:

The first slave receives a data request packet sent by the master, where the data request packet carries one or more pieces of block collection indication information, and each of the one or more pieces of block collection indication information is used to indicate data that needs to be collected by the master from the first slave; the first slave determines one or more pieces of block data based on the one or more pieces of block collection indication information; and the first slave sends a data response packet to the master, where the data response packet carries the one or more pieces of block data, and an amount of data carried in each of the one or more pieces of block data is greater than 0 and is less than or equal to 256.

In an embodiment of this application, one or more pieces of block data can be collected at one-time interaction between the master and the slave, and a maximum amount of data carried in each piece of block data is 256. In the Modbus system, one piece of data is represented in a minimum of 1 byte. Assuming that one piece of data is represented by 1 byte, for example, one piece of coil data, the data carried in each piece of block data is a maximum of 256 bytes. Assuming that one piece of data is represented by 2 bytes, for example, one piece of register data, the data carried in each piece of block data is a maximum of 512 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved. That is, in this solution, a long data packet is exchanged between the master and the slave to improve communication efficiency and improve system real-time performance.

Each of the one or more pieces of block collection indication information includes one start address and one data amount. That the first slave determines one or more pieces of block data based on the one or more pieces of block collection indication information includes: The first slave continuously reads data of a first data amount from a first start address to obtain first data, where the first start address is a start address included in a first block collection indication information, the first data amount is a data amount included in the first block collection indication information, and the first block collection indication information is one of the one or more pieces of block collection indication information; and the first slave uses the first start address, the first data amount, and the first data as one piece of block data.

After completely reading all data based on each of the one or more pieces of block collection indication information, the first slave obtains the one or more pieces of block data.

In this embodiment of this application, a Modbus packet is extended to obtain the data request packet and the data response packet. For related descriptions of the data request packet and the data response packet, refer to related descriptions according to the first aspect. Details are not described herein again.

According to a third aspect, a data collection apparatus is provided, where the data collection apparatus has a function of implementing behavior of the data collection method according to the first aspect. The data collection apparatus includes one or more modules, and the one or more modules are configured to implement the data collection method provided in the first aspect.

That is, an embodiment of this application provides a data collection apparatus, where the apparatus is applied to a master included in a Modbus system, the Modbus system further includes a plurality of slaves, and the apparatus includes:
a sending module, configured to send a data request packet to a first slave, where the data request packet carries one or more pieces of block collection indication information, each of the one or more pieces of block collection indication information is used to indicate data that needs to be collected by the master from the first slave, and the first slave is one of the plurality of slaves; and
a receiving module, configured to receive a data response packet sent by the first slave, where the data response packet carries one or more pieces of block data, the one or more pieces of block data are data provided by the first slave in response to the one or more pieces of block collection indication information, and an amount of data carried in each of the one or more pieces of block data is greater than 0 and is less than or equal to 256.

The apparatus further includes:
a determining module, configured to determine the one or more pieces of block collection indication information based on an address distribution feature of to-be-collected data of the first slave.

Each of the one or more pieces of block collection indication information includes one start address and one data amount.

Each of the one or more pieces of block data includes one start address, one data amount, and first data, and the first data is data that is read by the first slave based on corresponding block collection indication information.

The data request packet includes a first address field, a first function field, and a first data field, the first address field carries an address of the first slave, the first function field carries a first function code, the first data field carries the one or more pieces of block collection indication information, and the first function code is used to indicate the master to request the first slave to execute a data collection function.

The data response packet includes a second address field, a second function field, and a second data field, the second address field carries the address of the first slave, the second function field carries a second function code, the second data field carries the one or more pieces of block data, and the second function code is used to indicate a function actually executed by the first slave.

The first data field further carries a first frame sequence number, and the second data field further carries a second frame sequence number. The first frame sequence number and the second frame sequence number are used by the master to perform frame matching between the data request packet and the data response packet.

The first data field may further carry a block request quantity, and the block request quantity is used to indicate a block quantity of data that the master requests the first slave to collect by block.

The second data field further carries a block response quantity, and the block response quantity is used to indicate a block quantity of data actually collected by block by the first slave.

master sends a corresponding data request packet to each of the plurality of slaves at a same moment to complete one round of collection; or the master sequentially sends a corresponding data request packet to each of the plurality of slaves based on a polling sequence to complete one round of collection; or the master determines, based on a data amount of to-be-collected data of each of the plurality of slaves, a collection duration corresponding to a corresponding slave, and the master sends a corresponding data request packet to each of the plurality of slaves based on the collection duration corresponding to each slave of the plurality of slaves.

According to a fourth aspect, a data collection apparatus is provided, where the data collection apparatus has a function of implementing behavior of the data collection method according to the second aspect. The data collection apparatus includes one or more modules, and the one or more modules are configured to implement the data collection method provided in the second aspect.

That is, an embodiment of this application provides a data collection apparatus, where the apparatus is applied to a first slave included in a Modbus system, the first slave is one of a plurality of slaves included in the Modbus system, the Modbus system further includes a master, and the apparatus includes:
a receiving module, configured to receive a data request packet sent by the master, where the data request packet carries one or more pieces of block collection indication information, and each of the one or more pieces of block collection indication information is used to indicate data that needs to be collected by the master from the first slave;
a determining module, configured to determine one or more pieces of block data based on the one or more pieces of block collection indication information; and
a sending module, configured to send a data response packet to the master, where the data response packet carries the one or more pieces of block data, and an amount of data carried in each of the one or more pieces of block data is greater than 0 and is less than or equal to 256.

Each of the one or more pieces of block collection indication information includes one start address and one data amount.

The determining module includes:
a read submodule, configured to successively read data of a first data amount from a first start address to obtain first data, where the first start address is a start address included in first block collection indication information, the first data amount is a data amount included in the first block collection indication information, and the first block collection indication information is one of the one or more pieces of block collection indication information; and
a determining submodule, configured to use the first start address, the first data amount, and the first data as one piece of block data.

According to a fifth aspect, a data collection apparatus is provided, where the apparatus is applied to a master included in a Modbus system, the Modbus system further includes a plurality of slaves, and the apparatus includes a memory and a processor. The memory is configured to store a computer program, and the processor is configured to execute the computer program stored in the memory, to implement the data collection method provided in the first aspect.

According to a sixth aspect, a data collection apparatus is provided, where the apparatus is applied to a first slave included in a Modbus system, the first slave is one of a plurality of slaves included in the Modbus system, the Modbus system further includes a master, and the apparatus includes a processor and a memory. The memory is configured to store a computer program, and the processor is configured to execute the computer program stored in the memory, to implement the data collection method provided in the second aspect.

According to a seventh aspect, a Modbus system is provided, where the system includes a master and a plurality of slaves, and a first slave is one of the plurality of slaves.

The master is configured to implement the data collection method provided in the first aspect.

The first slave is configured to implement the data collection method provided in the second aspect.

According to an eighth aspect, a computer-readable storage medium is provided. The computer-readable storage medium stores a computer program, and when the computer program is run on a computer, the computer is enabled to perform the data collection method according to the first aspect or the second aspect.

According to a ninth aspect, a computer program product including instructions is provided, and when the computer program product runs on a computer, the computer is enabled to perform the data collection method according to the first aspect or the second aspect.

The technical effects obtained according to the third aspect, the fourth aspect, the fifth aspect, the sixth aspect, the seventh aspect, the eighth aspect, and the ninth aspect are similar to those obtained by the corresponding technical means according to the first aspect or the second aspect. Details are not described herein again.

The technical solutions provided in embodiments of this application can bring at least the following beneficial effects:

In embodiments of this application, one or more pieces of block data can be collected at one-time interaction between the master and the slave, and a maximum amount of data carried in each piece of block data is 256. In the Modbus system, one piece of data is represented in a minimum of 1 byte, so that the data carried in each piece of block data is a maximum of 256 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved.

### BRIEF DESCRIPTION OF DRAWINGS

FIG. 1 is an architectural diagram of a system related to a data collection method according to an embodiment of this application;
FIG. 2 is a schematic diagram of a structure of a computer device according to an embodiment of this application;
FIG. 3 is a flowchart of a data collection method according to an embodiment of this application;
FIG. 4 is a schematic diagram of frame matching between a master and a first slave according to an embodiment of this application;
FIG. 5 is a schematic diagram of a method for collecting data from a plurality of slaves by a master according to an embodiment of this application;
FIG. 6 is a schematic diagram of another method for collecting data from a plurality of slaves by a master according to an embodiment of this application;
FIG. 7 is a schematic diagram of a structure of a data collection apparatus according to an embodiment of this application; and
FIG. 8 is a schematic diagram of a structure of another data collection apparatus according to an embodiment of this application.

### DESCRIPTION OF EMBODIMENTS

To make objectives, technical solutions, and advantages of this application clearer, the following further describes implementations of this application in detail with reference to the accompanying drawings.

A system architecture and a service scenario described in embodiments of this application are intended to describe the technical solutions in embodiments of this application more clearly .

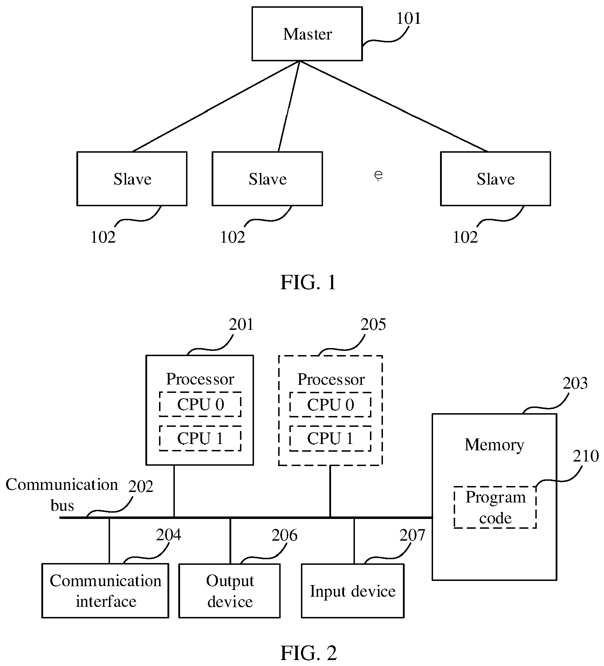

FIG. 1 is an architectural diagram of a system related to a data collection method according to an embodiment of this application. The system is a Modbus system. With reference to FIG. 1, the Modbus system includes one master 101 and a plurality of slaves 102. The master 101 can be connected to each slave 102 in a wired or wireless manner to communicate.

In this embodiment of this application, for example, the master 101 collects data of a first slave 102. The first slave 102 is one of the plurality of slaves 102. The master 101 is configured to send a data request packet to the first slave 102. The data request packet carries one or more pieces of block collection indication information, which indicates that the master 101 collects the data of the first slave 102 by block. The first slave 102 is configured to read corresponding data by block based on the received data request packet, to determine one or more pieces of block data, and send, to the master 101, a data response packet that carries these pieces of block data. For another slave 102 in the plurality of slaves 102 other than the first slave 102, the master 101 can collect data of the corresponding slave 102 in a same interaction manner as that of the first slave 102.

It should be noted that in this embodiment of this application, a maximum amount of data carried in each piece of the block data collected by the master 101 is 256. In a case in which the master 101 makes a request once and the slave responds once to collect a plurality of pieces of the block data, the data collected in one request and one response in this solution is not limited to 252 bytes, that is, in this solution, communication efficiency can be improved by using a long data packet.

In some embodiments, the master 101 is referred to as a centralized controller, a data center, an enterprise command center (ECC), or the like, and the slave 102 is referred to as a southbound device.

In this embodiment of this application, the master 101 is a device, for example, a computer, a controller, a server, or the like. Any slave 102 is a device, for example, an electromagnetic lock, an automatic translation door, an access control device, an emergency button, an access control executor, a skylight electromagnetic lock, a skylight executor, a wireless local area network (wireless fidelity, Wi-Fi) converter, a camera, a computer, a mobile phone, a cabinet door magnet, a cabinet electronic lock, a temperature sensor, a water leakage sensor, an audible and visual alarm, a smart remote power distribution unit (rPDU), a smart U-bit manager, an air conditioner, a power distribution cabinet, an intelligent bus slot, or the like.

FIG. 2 is a schematic diagram of a structure of a computer device according to an embodiment of this application. Optionally, the computer device is the master 101 or the slave 102 shown in FIG. 1, and the computer device includes one or more processors 201, a communication bus 202, a memory 203, and one or more communication interfaces 204.

The processor 201 is a central processing unit (CPU), a network processor (NP), a microprocessor, or one or more integrated circuits configured to implement the solutions of this application, for example, an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The communication bus 202 is configured to transmit information among the foregoing components. Optionally, the communication bus 202 is classified into an address bus, a data bus, a control bus, and the like. For ease of indication, the bus is indicated by using only one bold line in the figure. However, it does not indicate that there is only one bus or only one type of bus.

The memory 203 is, but is not limited to, a read-only memory (ROM), a random access memory (RAM), an electrically erasable programmable read-only memory (EEPROM), an optical disc (including a compact disc read-only memory (CD-ROM), a compact disc, a laser disc, a digital versatile disc, a blue-ray disc, or the like), a magnetic disk storage medium or another magnetic storage device, or any other medium that can be used to carry or store expected program code in a form of an instruction or a data structure and that can be accessed by a computer. The memory 203 exists independently and is connected to the processor 201 by using the communication bus 202. Alternatively, the memory 203 is integrated with the processor 201.

The communication interface 204 is used by an apparatus such as any transceiver to communicate with another device or a communication network. The communication interface 204 includes a wired communication interface, and optionally, further includes a wireless communication interface. The wired communication interface is, for example, an Ethernet interface. Optionally, the Ethernet interface is an optical interface, an electrical interface, or a combination thereof. The wireless communication interface is a wireless local area network (WLAN) interface, a cellular network communication interface, a combination thereof, or the like. When the computer device is the master 101, the communication interface 204 is configured to communicate with the slave 102. When the computer device is the slave 102, the communication interface 204 is configured to communicate with the master 101.

In some embodiments, the computer device includes a plurality of processors, such as the processor 201 and a processor 205 shown in FIG. 2. Each of these processors is a single-core processor or a multi-core processor. The processor herein may refer to one or more devices, circuits, and/or processing cores configured to process data (for example, computer program instructions).

In a specific implementation, in an embodiment, the computer device further includes an output device 206 and an input device 207. The output device 206 communicates with the processor 201, and can display information in a plurality of manners. For example, the output device 206 may be a liquid crystal display (LCD), a light emitting diode (LED) display device, a cathode ray tube (CRT) display device, or a projector (projector). The input device 207 communicates with the processor 201, and may receive a user input in a plurality of manners. For example, the input device 207 may be a mouse, a keyboard, a touchscreen device, or a sensor device.

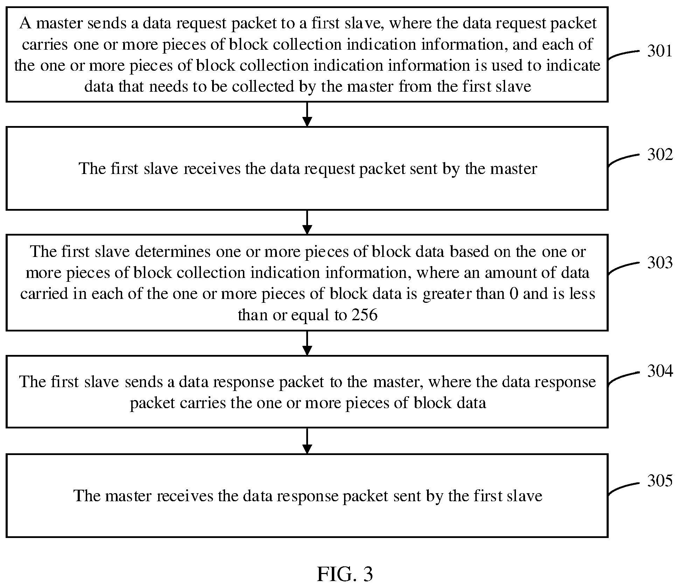

In some embodiments, the memory 203 is configured to store program code 210 (also referred to as a computer program) that is used to execute the solutions of this application, and the processor 201 can execute the program code 210 stored in the memory 203. The program code 210 includes one or more software modules. The computer device can implement, by using the processor 201 and the program code 210 in the memory 203, a data collection method provided in the following embodiment of FIG. 3.

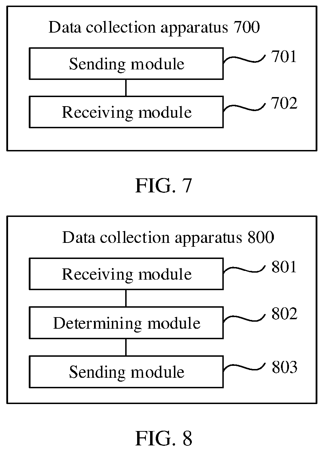

When the computer device is the master 101, the memory 203 is configured to store the program code 210, and the processor 201 is configured to execute the program code 210 stored in the memory 203, to implement a corresponding function of a master in the data collection method provided in this embodiment of this application. For example, when a sending module 701 and a receiving module 702 in an embodiment shown in FIG. 7 are implemented by using software, the program code 210 may include a sending module and a receiving module. The sending module is configured to send a data request packet to the slave, and the receiving module is configured to receive a data response packet sent by the slave.

When the computer device is the slave 102, the memory 203 is configured to store the program code 210, and the processor 201 is configured to execute the program code 210 stored in the memory 203, to implement a corresponding function of the slave in the data collection method provided in embodiments of this application. For example, when a receiving module 801, a determining module 802, and a sending module 803 in an embodiment shown in FIG. 8 are implemented by using software, the program code 210 may include a receiving module, a determining module, and a sending module. The receiving module is configured to receive a data request packet sent by the master, the determining module is configured to determine block data based on the data request packet, and the sending module is configured to send a data response packet to the master.

FIG. 3 is a flowchart of a data collection method according to an embodiment of this application. In this embodiment of this application, the data collection method is used in a Modbus system, and the Modbus system includes a master and a plurality of slaves. With reference to FIG. 3, the method includes the following steps.

Step 301: The master sends a data request packet to a first slave, where the data request packet carries one or more pieces of block collection indication information, and each of the one or more pieces of block collection indication information is used to indicate data that needs to be collected by the master from the first slave.

In this embodiment of this application, the Modbus system includes the master and the plurality of slaves. The master can collect data of each of the plurality of slaves, for example, collect register data and coil data. In the following, that the master collects data of the first slave is used as an example for description, and the first slave is one of the plurality of slaves.

In this embodiment of this application, the master the data request packet to the first slave, where the data request packet carries the one or more pieces of block collection indication information, and each of the one or more pieces of block collection indication information is used to indicate the data that needs to be collected by the master from the first slave. That is, in this embodiment of this application, the master can collect the data of the first slave by block.

In this embodiment of this application, addresses of to-be-collected data of the first slave may be continuous or discontinuous, for example, register addresses are continuous or discontinuous. Before sending the data request packet to the first slave, the master can further first determine the one or more pieces of block collection indication information based on an address distribution feature of the to-be-collected data of the first slave. In other words, the address distribution feature of the to-be-collected data of the first slave is used to indicate the master to determine the one or more pieces of block collection indication information.

In this embodiment of this application, before the first slave is added to the Modbus system, a developer writes the address distribution feature corresponding to the first slave into the master. For example, when an air conditioner is purchased and added to the Modbus system, a vendor provides product-related information of the air conditioner to the developer. The product-related information includes an address distribution feature corresponding to the air conditioner, for example, a register address distribution feature. The register address distribution feature is used to describe which block of a register is used to store a temperature, which block of the register is used to store a wind speed, and the like. Then, the developer writes the product-related information of the air conditioner into the master. After the air conditioner is added to the Modbus system, when the master needs to collect data of the air conditioner, the master can determine one or more pieces of block collection indication information based on the address distribution feature corresponding to the air conditioner.

It should be noted that the master determines the block collection indication information based on the address distribution feature, so that more valid data can be collected to a maximum extent, and it can be avoided that there is some invalid data in data collected by the master when the addresses are discontinuous.

In this embodiment of this application, each of the one or more pieces of block collection indication information includes one start address and one data amount, to indicate each start address and a corresponding data amount that are of data that need to be collected by block from the first slave.

A length of the start address is 2 bytes, and a length of the data amount is 1 byte. To be specific, the master may collect data of the slave by addressing from 0 to 65535, and a value of the data amount represented in a binary system is greater than 0 and less than or equal to 256, which indicates that corresponding block collection indication information is used to indicate that a maximum of 256 pieces of data is collected in this block, for example, a maximum of 256 pieces of register data is collected in the block.

In this embodiment of this application, a Modbus packet is extended to obtain the data request packet. The data request packet includes a first address field, a first function field, and a first data field, the first address field carries an address of the first slave, the first function field carries a first function code, the first data field carries the one or more pieces of block collection indication information, and the first function code is used to indicate the master to request the first slave to execute a data collection function.

A length of the first address field is 1 byte, that is, the address of the first slave is represented by 1 byte, and a length of the first function field is one or 2 bytes.

It should be noted that the first function code included in the first function field is a user-defined function code reserved in a Modbus protocol, namely, any function code in decimal 65 to 72 and 100 to 110. When a length of the first function code is 1 byte, that is, the first function field includes the first function code, the length of the first function field is 1 byte.

Because there is a limited quantity of function codes that can be defined by a user, in some embodiments, a corresponding function may be further indicated by defining a function sub-code. That is, in addition to carrying the first function code, the first function field carries a first function sub-code. The first function sub-code and the first function code together indicate the master to request the first slave to execute the data collection function. Optionally, a length of the first function sub-code is 1 byte, and a value is any one of decimal 0 to 255. When the first function field includes the first function code and the first function sub-code, the length of the first function field is 2 bytes.

To improve reliability of communication between the master and the slave and resolve a problem of abnormal frame matching between both the master and the slave, in this embodiment of this application, the first data field further carries a first frame sequence number, and the first slave can respond to the data request packet based on the first frame sequence number. That is, the first slave sends a data response packet to the master, where the data response packet carries a second frame sequence number, and the first frame sequence number and the second frame sequence number are used by the master to perform frame matching between the data request packet and the data response packet. For example, that the first frame sequence number and the second frame sequence number are the same indicates that a corresponding data request packet and data response packet are frame-matched packets.

A length of the first frame sequence number is 1 byte, and a value is any one of decimal 0 to 255; the length of the first frame sequence number is 2 bytes, and the value is any one of decimal 0 to 65535; or the first frame sequence number is another length. That is, a maximum value of the first frame sequence number may be defined based on a communication requirement.

The first data field further carries a block request quantity, and the block request quantity is used to indicate a block quantity of data that the master requests the first slave to collect by block. That is, the master directly carries a requested block quantity in the data request packet, so that the first slave does not need to accumulate and calculate the block quantity based on the one or more pieces of block collection indication information.

A length of the block request quantity is a specified length, for example, 1 byte, which indicates that data is collected by dividing a maximum of 256 blocks. In this way, a maximum length of the packet is limited by using the block request quantity, to ensure communication quality. For example, when not all data of the first slave can be completely collected by using the 256 blocks, the master needs to collect all the data of the first slave by using a plurality of requests, and requests to collect some data each time. In this way, it can be avoided that a data response packet carrying all the data of the first slave is lost or the master cannot collect any data when the first slave does not respond due to timeout.

Alternatively, the length of the block request quantity is not limited. The master determines the block request quantity based on an amount and an address distribution feature of data that needs to be collected from the first slave, to completely collect all the data of the first slave at one-time interaction, minimize a quantity of times of interaction, and improve communication efficiency. For example, assuming that the master determines that the data of the first slave can be completely collected by dividing 20 blocks, the length of the block request quantity is 1 byte and a decimal value is 20. Assuming that the master determines that the data of the first slave can be completely collected by dividing 500 blocks, the length of the block request quantity is 2 bytes and the decimal value is 500.

Alternatively, the first data field further carries a first data length, and a value of the first data length is hexadecimal 0xFF, which indicates that the first data length is an invalid value. After obtaining the value by parsing the data request packet, the first slave learns that the master does not limit, by using the first data length, a length of the data that needs to be collected, so that the first data length is directly ignored. Compared with a data length specified in a standard protocol that is represented by 1 byte, the data length is not limited in this solution. In this way, communication efficiency is improved by interacting a long data packet.

Table 1 shows a format description of the data request packet provided in an embodiment of this application. With reference to Table 1, the data request packet includes the first address field (not shown) and a first protocol data unit (protocol data unit, PDU). The first PDU includes the first function field and the first data field, and the first function field carries the first function code and the first function sub-code. Both a length of the first function code and a length of the first function sub-code are 1 byte. In this embodiment of this application, a value of the first function code is hexadecimal Ox41, and a value of the first function sub-code is hexadecimal 0x33. The first data field carries the first data length, the first frame sequence number, the block request quantity, and n pieces of block collection indication information. A length of the first data length is 1 byte, and the value is hexadecimal 0xFF, which indicates that the first data length is an invalid value. A length of the first frame sequence number is 1 byte, and the first frame sequence number is set by the master. The second frame sequence number backfilled by the first slave in the data response packet is the same as the first frame sequence number. A length of the block request quantity is 1 byte, a value is any one of 1 to 256 in decimal, and the value is represented as numBlock in symbol, which indicates that the data is divided into n blocks, that is, n=numBlock. In Table 1, blocks 1 to n are used to represent the n pieces of block collection indication information, and each piece of block collection indication information includes one start address and one data amount. A length of the start address is 2 bytes. A length of the data amount is 1 byte, which indicates that the first slave needs to continuously read data of the data amount from the start address.

**Table 1**

| Field included in a first PDU | | Length (in byte) | Description |
|---|---|---|---|
| First function code | | 1 | 0x41 |
| First function sub-code | | 1 | 0x33 |
| First data length | | 1 | 0xFF |
| First frame sequence number | | 1 | Set by a master, and backfilled by a slave |
| Block request quantity | | 1 | [1, 256], numBlock |
| Block 1 | Start address | 2 | |
| | Data amount | 1 | |
| ... | ... | 3 | |
| Block n | ... | 3 | n=numBlock |

A working mode based on the Modbus protocol is selected between the master and the slave. Working modes in the Modbus protocol include a bus mode of a Modbus remote terminal unit (RTU), a network mode of a Modbus transmission control protocol (TCP), and the like. In the bus mode of a Modbus RTU, the data request packet sent by the master carries the first address field, the first function field, and the first data field. In the network mode of a Modbus TCP, the data request packet sent by the master carries a first TCP packet header, a first Modbus TCP packet header, and a first Modbus data frame, and the first Modbus data frame includes the first address field, the first function field, and the first data field.

Step 302: The first slave receives the data request packet sent by the master.

In this embodiment of this application, after the master sends the data request packet to the first slave, the data request packet is sent to the first slave based on the address of the first slave that is carried in the data request packet, and the first slave receives the data request packet sent by the master.

Step 303: The first slave determines one or more pieces of block data based on the one or more pieces of block collection indication information, where an amount of data carried in each of the one or more pieces of block data is greater than 0 and is less than or equal to 256.

In this embodiment of this application, after receiving the data request packet, the first slave can read corresponding data by block based on the one or more pieces of block indication information carried in the data request packet, to determine the one or more pieces of block data.

In this embodiment of this application, each of the one or more pieces of block data includes one start address, one data amount, and first data, and the first data is data that is read by the first slave based on corresponding block collection indication information. It should be noted that the amount of data carried in each of the one or more pieces of block data is greater than 0 and is less than or equal to 256.

It can be learned from the foregoing that each of the one or more pieces of block collection indication information includes one start address and one data amount, and the first slave continuously reads data of a first data amount from a first start address to obtain the first data. Then, the first slave uses the first start address, the first data amount, and the first data as one piece of block data. The first start address is a start address included in first block collection indication information, the first data amount is a data amount included in the first block collection indication information, and the first block collection indication information is one of the one or more pieces of block collection indication information.

After completely reading all data based on each of the one or more pieces of block collection indication information, the first slave obtains the one or more pieces of block data, where the one or more pieces of block data are data provided by the first slave in response to the one or more pieces of block collection indication information.

It should be noted that a length of the first data included in each piece of block data is a corresponding data amount multiplied by a unit data length. The unit data length is a length of one piece of data collected by the master, for example, a length of one piece of register data is 2 bytes, so that a corresponding unit data length is equal to 2 bytes, and a length of one piece of coil data is 1 byte, so that a corresponding unit data length is equal to 1 byte.

For example, it is assumed that the master collects register data of the first slave, the length of one piece of register data is 2 bytes, the unit data length is equal to 2 bytes, the foregoing start address is a register address, the data amount is a register quantity, the data request packet received by the first slave carries 3 pieces of block collection indication information, a first piece of block collection indication information includes a register address D1 and a register quantity N1, a second piece of block collection indication information includes a register address D2 and a register quantity N2, and a third piece of block collection indication information includes a register address D3 and a register quantity N3. In this case, the first slave continuously reads N1 pieces of register data from D1 and obtains the first piece of block data, where a length of the first piece of block data is 2×N1; continuously reads N2 pieces of register data from D2 and obtains the second piece of block data, where a length of the second piece of block data is 2×N2; and continuously reads N3 pieces of register data from D3 and obtains the third piece of block data, where a length of the third piece of block data is 2×N3.

After reading the one or more pieces of block data, the first slave encapsulates the one or more pieces of block data into the data response packet, that is, the data response packet carries the one or more pieces of block data.

In this embodiment of this application, the Modbus packet is also extended to obtain the data response packet. The data response packet includes a second address field, a second function field, and a second data field, the second address field carries the address of the first slave, the second function field carries a second function code, the second data field carries the one or more pieces of block data, and the second function code is used to indicate a function actually executed by the first slave.

A length of the second address field is 1 byte, that is, the address of the first slave is represented by 1 byte, and a value of the second address field and a value of the second function field are the same. A length of the second function field is one or 2 bytes. It should be noted that when a value of the second function field is the same as the function code carried in the first function field, it indicates that the first slave correctly executes a function requested to be executed by the master. That is, when the first function field includes only the first function code, the second function field includes only the second function code, and the first slave correctly executes a corresponding function, the second function code is the same as the first function code. When the first function field includes the first function code and the first function sub-code, the second function field also includes the second function code and a second function sub-code, and the first slave correctly executes a corresponding function, the second function code and the first function code are the same, and the second function sub-code and the first function sub-code are the same.

For example, it is assumed that the first function field includes the first function code and the first function sub-code, the first function code is hexadecimal Ox41, and the first function sub-code is hexadecimal 0x33. In this case, when the first slave correctly executes the corresponding function, the second function field includes the second function code and the second function sub-code, the second function code is also hexadecimal Ox41, and the second function sub-code is also hexadecimal 0x33.

It can be learned from the foregoing that, to improve the reliability of communication between the master and the slave, the first data field further carries the first frame sequence number. In this case, the second data field further carries a second frame sequence number. The first frame sequence number and the second frame sequence number are used by the master to perform frame matching between the data request packet and the data response packet. For example, after the first slave parses the data request packet to obtain the first frame sequence number, the first slave sets the second frame sequence number carried in the data response packet to be the same as the first frame sequence number, to indicate the master to perform frame matching between the data response packet and the data request packet.

A length of the second frame sequence number is the same as that of the first frame sequence number, and is one or 2 bytes or another length.

The second data field further carries a block response quantity, and the block response quantity is used to indicate a block quantity of data actually collected by block by the first slave. That is, the first slave directly carries an actually responded block quantity in the data response packet, so that the master does not need to accumulate and calculate the block quantity based on the one or more pieces of block data.

It should be noted that, when the first slave correctly reads the data based on the one or more pieces of block collection indication information, the block response quantity is the same as the block request quantity. Optionally, a length of the block response quantity is the same as the length of the block request quantity, that is, the block response quantity and the block request quantity are corresponding fields. This ensures that the master and the slave encapsulate the corresponding fields into packets based on a same length, and ensures that both the master and the slave can correctly parse the packets.

Furthermore, the second data field further carries a second data length, and a value of the second data length is hexadecimal 0xFF, which indicates that the second data length is an invalid value. After obtaining the value by parsing the data response packet, the master learns that the first slave does not limit, by using the second data length, a length of actually read data, so that the master directly ignores the second data length.

Furthermore, when the first slave does not read data by addressing based on one piece of block collection indication information, the first slave may use a corresponding start address, data amount, and error information as a corresponding block data to indicate that the master does not obtain corresponding data. The error information is represented by 1 byte, and a value is 0xFF, which indicates that the corresponding block data is invalid.

Table 2 shows a format description of the data response packet provided in an embodiment of this application. With reference to Table 2, the data response packet includes the second address field (not shown) and a second protocol data unit (PDU). The second PDU includes the second function field and the second data field, the second function field carries the second function code and the second function sub-code. Both a length of the second function code and a length of the second function sub-code are 1 byte. In this embodiment of this application, the second function code is the same as the first function code, and is hexadecimal Ox41, and the second function sub-code is the same as the first function sub-code, and is hexadecimal 0x33. The second data field carries a second data length, the second frame sequence number, the block response quantity, and n pieces of block data. A length of the second data length is 1 byte, and a value is hexadecimal 0xFF, which indicates that the second data length is an invalid value. A length of the second frame sequence number is 1 byte, and the second frame sequence number is the same as the first frame sequence number. The second frame sequence number is backfilled by the first slave, and the second frame sequence number backfilled by the first slave in the data response packet is the same as the first frame sequence number. The length of the block response quantity is 1 byte, a value is any one of 1 to 256 in decimal, and the value is represented as numBlock in symbol, which indicates that the data is divided into n blocks, that is, n=numBlock. When the first slave responds correctly, the block response quantity is the same as the block request quantity. In Table 2, blocks 1 to n are used to represent the n pieces of block data, and each block data includes one start address, one data amount, and one piece of first data. A length of the start address is 2 bytes. A length of the data amount is 1 byte, which indicates that the first slave reads data of the data amount from the start address. A length of the first data is a unit data length multiplied by a corresponding data amount. In Table 2, for example, the register data is collected. A length of one piece of register data is 2 bytes, that is, the unit data length is 2 bytes. Assuming that an amount of data carried in an i^{th} block data is numRegBlocki, a length of first data carried in the i^{th} block data is 2×numRegBlocki, and a total length of the i^{th} block data is 3+2×numRegBlocki.

**Table 2**

| Field included in a second PDU | | Length (in byte) | Description |
|---|---|---|---|
| Second function code | | 1 | 0x41 |
| Second function sub-code | | 1 | 0x33 |
| Second data length | | 1 | Encoding 0xFF |
| Second frame sequence number | | 1 | Set by a master, and backfilled by a slave |
| Block response quantity | | 1 | [1, 256], numBlock |
| Block 1 | Start address | 2 | |
| | Data amount | 1 | numRegBlock1 |
| | First data | 2×numRegBlock1 | |
| ... | ... | 3+2×numRegBlocki | |
| Block n | ... | 3+2×numRegBlockn | n=numBlock |

In this embodiment of this application, it is assumed that both the block request quantity and the block response quantity are represented by 1 byte, and both values are numBlock. In this case, a maximum value of numblock is 256, which indicates that in a block request of the master and a block response of the slave, data can be collected by dividing a maximum of 256 blocks. It is assumed that the register data is collected, and an amount of data carried in each block data is represented by 1 byte, that is, a maximum amount of the data carried in each block data is 256. In this case, a data amount of the first data carried in each block data may be up to 2×256 bytes, that is, 512 bytes. In this way, when the maximum of 256 blocks are requested, and each block data carries valid data at a maximum of 512 bytes, the master and the first slave can collect valid data at a maximum of 131072 bytes at one-time interaction, which greatly improves communication efficiency.

It can be learned from the foregoing that a working mode configured for the master includes the bus mode of a Modbus RTU or the network mode of a Modbus TCP. When the master selects the bus mode of a Modbus RTU, the first slave encapsulates the data response packet based on the bus mode of a Modbus RTU, that is, the data response packet carries the second address field, the second function field, and the second data field. When the master selects the network mode of a Modbus TCP, the first slave encapsulates the data response packet based on the network mode of a Modbus TCP, that is, the data response packet carries a second TCP packet header, a second Modbus TCP packet header, and a second Modbus data frame, and the second Modbus data frame includes the second address field, the second function field, and the second data field.

Step 304: The first slave sends the data response packet to the master, where the data response packet carries the one or more pieces of block data.

In this embodiment of this application, after encapsulating the data response packet, the first slave sends the data response packet to the master.

Step 305: The master receives the data response packet sent by the first slave.

In this embodiment of this application, after receiving the data response packet sent by the first slave, the master can obtain, by parsing, the one or more pieces of block data carried in the data response packet, that is, obtain the data that needs to be collected.

When a data response packet carries the second frame sequence number, the master matches a data request packet that is in data request packets sent by the master and that carries the first frame sequence number same as the second frame sequence with the data response packet, to determine that a correctly matched data response packet is received. If a second frame sequence number carried in a received data response packet sent by the first slave is different from the first frame sequence number, the master determines that the data response packet is an abnormal packet, and discards the data response packet, processes the data response packet as historical data, or performs another processing.

A timeout response mechanism is configured between the master and the first slave. Before the first slave responds before timeout, the master always waits for a response from the first slave. In addition, when receiving the answer from the first slave, the master determines whether a second frame sequence number in the answer is the same as the first frame sequence number in the request. If the frame sequence numbers are the same, the master normally receives the data response packet. If the frame sequence numbers are different, the master determines that the data response packet is an abnormal packet, and before the first slave responds before timeout, the master continues to wait for the first slave to answer with a correct data response packet. Optionally, when the first slave does not respond before timeout, if the master receives a data response packet that carries a second frame sequence number same as the first frame sequence number, the master determines that the data response packet is an abnormal packet, and the master resends a data request packet to the first slave to request to collect data. A first frame sequence number carried in the sent data request packet in this case is the same as or different from the first frame sequence number carried in the data request packet sent last time.

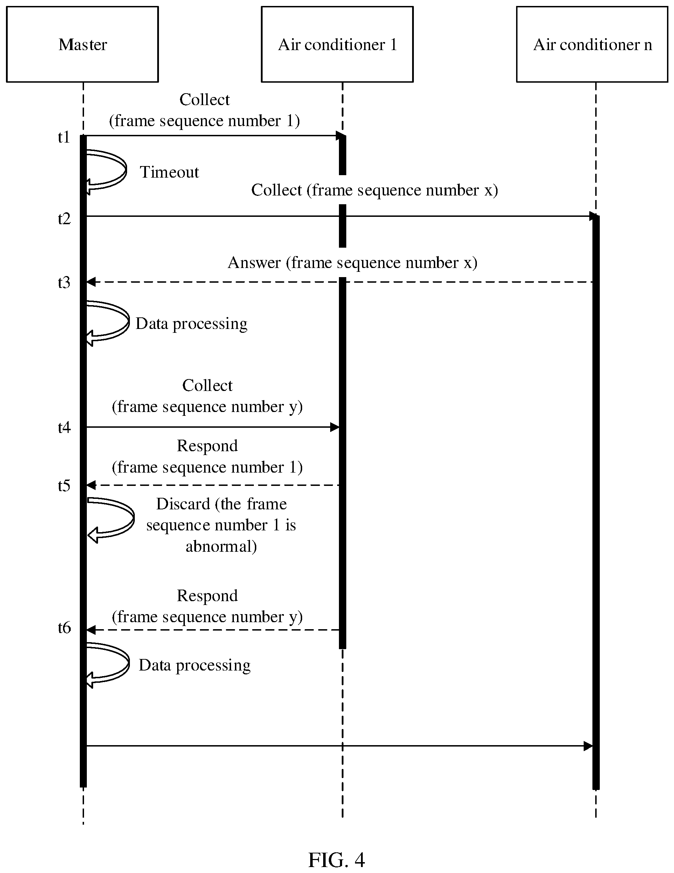

For example, with reference to FIG. 4, the first slave is an air conditioner 1, and the master sends, at a moment t1, a data request packet carrying a frame sequence number 1 to the first slave. When the first slave does not answer before timeout, the master sends, at a moment t4, a data request packet carrying a frame sequence number y to the first slave. The master receives, at a moment t5, a data response packet that carries the frame sequence number 1 and that is responded by the first slave. Because a response sequence number is not y, the master discards the data response packet carrying the frame sequence number 1. The master receives, at a moment t6, a data response packet that carries the frame sequence number y and that is sent by the first slave. Because the data response packet does not time out, the master normally parses the data response packet for data processing.

The foregoing uses interaction between the master and the first slave as an example to describe the data collection method provided in this embodiment of this application. It should be noted that, for another slave in the plurality of slaves included in the Modbus system other than the first slave, the master may collect data of the other slaves in the same way as collecting data of the first slave. Details are not described herein again.

In this embodiment of this application, for the plurality of slaves included in the Modbus system, the master can flexibly set a collection duration for collecting data of each slave, to improve overall performance of the Modbus system, that is, ensure communication efficiency, communication quality, and system real-time performance. To be specific, in this embodiment of this application, there are a plurality of implementations for collecting the data of the plurality of slaves by the master. The following describes three implementations.

In a first implementation, the master sends a corresponding data request packet to each of the plurality of slaves at a same moment to complete one round of collection.

In this embodiment of this application, the master sends the corresponding data request packet to each of the plurality of slaves at the same moment, and then the master waits for each slave to answer. After receiving a data response packet sent by each of the plurality of slaves, the master determines that current round of collection is complete, and then starts next round of collection. Alternatively, a collection period is set for the master, and the master waits, in one collection period, for each slave to answer. When a next collection period arrives, the master does not wait, but directly starts next round of collection.

It should be noted that, in the first implementation, the master requests data from the plurality of slaves at the same moment, and some slaves may respond at a same time. When the master and the slave work in the network mode of a Modbus TCP, there is no conflict even if these slaves respond at the same time, and the master can successfully receive response from these slaves. However, when the master and the slave work in the bus mode of a Modbus RTU, there may be a conflict if these slaves respond at the same time, and consequently, the master fails to receive the response from these slaves. That is, the first implementation is applicable to the network mode of a Modbus TCP.

In this implementation, when one round of collection starts, the master requests the data from all the slaves at the same time and there is no need to wait for one slave to respond before requesting a next one. In this way, duration of one round of collection is greatly reduced, and time consumption is reduced.

In a second implementation, the master sequentially sends a corresponding data request packet to each of the plurality of slaves based on a polling sequence to complete one round of collection.

In this embodiment of this application, the polling sequence is configured for the master. The master sequentially sends the corresponding data request packet to each of the plurality of slaves based on the polling sequence. To be specific, after sending a data request packet to a 1st slave, the master waits for the 1st slave to answer, and then sends a data request packet to a 2nd slave after the 1st slave responds, and so on, until the master requests to collect data from the last slave and receives a response from the last slave, and the master determines that one round of collection is complete.

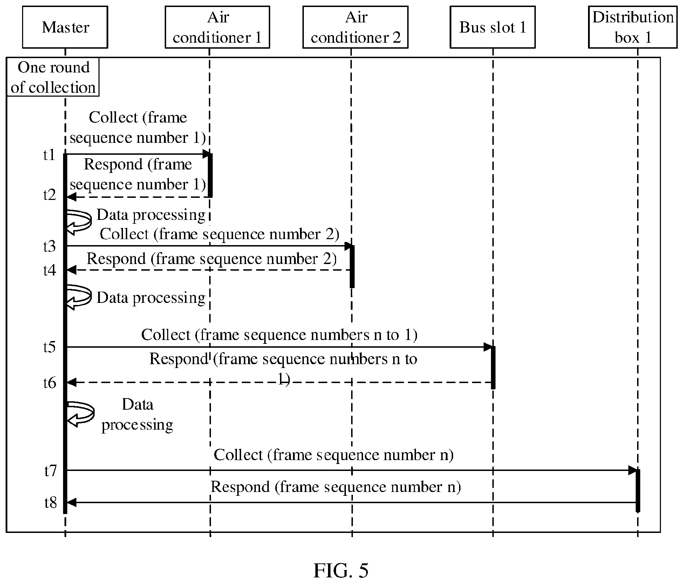

For example, with reference to FIG. 5, the plurality of slaves include an air conditioner 1, an air conditioner 2, a bus slot 1, and a distribution box 1, and the polling sequence is the air conditioner 1, the air conditioner 2, the bus slot 1, and the distribution box 1. At a moment t1, the master starts one round of collection. To be specific, the master sends a data request packet carrying a frame sequence number 1 to the air conditioner 1 at the moment t1; performs data processing after receiving, at a moment t2, a data response packet that carries the frame sequence number 1 and that is responded by the air conditioner 1; sends a data request packet carrying a frame sequence number 2 to the air conditioner 2 at a moment t3; performs data processing after receiving, at a moment t4, a data response packet that carries the frame sequence number 2 and that is responded by the air conditioner 2; sends a data request packet carrying a frame sequence number n-1 to the bus slot 1 at a moment t5; performs data processing after receiving, at a moment t6, a data response packet that carries the frame sequence number n-1 and that is responded by the bus slot 1; sends a data request packet carrying a frame sequence number n to the distribution box 1 at a moment t7; and performs data processing after receiving, at a moment t8, a data response packet that carries the frame sequence number n and that is responded by the distribution box 1. This completes one round of collection.

In this implementation, a one-question-to-one-answer manner is used between the master and the slave, and the plurality of slaves are sequentially requested based on the polling sequence to complete one round of collection, which can ensure that the master successfully polls and collects data of each slave in one round of collection.

In a third implementation, the master determines, based on a data amount of to-be-collected data of each of the plurality of slaves, a collection duration corresponding to a corresponding slave, and the master sends a corresponding data request packet to each of the plurality of slaves based on the collection duration corresponding to each slave of the plurality of slaves.

In this embodiment of this application, the master can determine, based on the data amount of the to-be-collected data of each slave, the collection duration corresponding to the corresponding slave. For example, the master determines a collection period corresponding to each slave, or the master determines a specific time in next collection of a slave.

For example, it is assumed that the master collects register data of each slave. There are a large quantity of registers on a slave 1, and an amount of data that needs to be collected is large. In this case, the master determines a collection period of the slave 1 as 10s. There are a small quantity of registers on a slave 2, and an amount of data that needs to be collected is small. In this case, the master determines a collection period of the slave 2 as 1s.

In this implementation, the master more flexibly determines, based on the data amount of the to-be-collected data of each slave, the collection duration corresponding to each slave. This can improve flexibility of the collection method and make full use of system resources, and avoid that some slaves have a busy answer service due to a large amount of data, while some other slaves have a small amount of data but the data cannot be collected for a long time.

In addition to the foregoing three described implementations, optionally, the master determines a collection duration of a corresponding slave based on a real-time requirement of a service corresponding to each of the plurality of slaves. The master sends a corresponding data request packet to each of the plurality of slaves based on the collection duration corresponding to each of the plurality of slaves. In this way, the real-time requirement of the service corresponding to each slave can be met. To be specific, for a corresponding slave with a high real-time service, the master collects data of the corresponding slave at a high frequency, and for a corresponding slave with a low real-time service, the master collects data of the corresponding slave at a low frequency.

The master determines a collection duration of a corresponding slave based on a data amount of to-be-collected data of each slave and a real-time requirement of a service corresponding to each slave, to consider both a size of the data amount and the real-time requirement and ensure overall performance of the Modbus system.

The master requests to collect data from each slave based on a collection duration configured by the user.

In addition to some implementations described above, the master also sends a corresponding data request packet to each slave in any other possible implementation to collect data of a corresponding slave.

In this solution, communication efficiency is improved by exchanging a long data packet between the master and the slave, so that the data of the corresponding slave can be completely collected at one-time interaction between the master and the slave. Optionally, in one-time collection, the master sends a plurality of data request packets to one slave, to completely collect data of a corresponding slave at multiple-time interaction. For example, a slave needs to collect thousands of pieces of or even more register data. If such a data amount is carried by one-time interaction, communication quality and reliability may be affected. If a packet responded with by the slave is lost or the slave does not respond before timeout, the master cannot collect any data of the slave. In this case, if the master collects all data by interacting with the slave for a plurality of times, it is ensured to some extent that the master can collect the data of the slave.

In addition, it should be noted that, in this embodiment of this application, as in the foregoing second implementation, the one-question-to-one-answer manner is used between the master and the slave to poll each slave to collect data, which can ensure that the data of each slave is polled and collected. As in the foregoing another implementation, a multiple-question-to-multiple-answer manner is used between the master and the slave to collect the data of each slave, which can improve flexibility of the collection method and make full use of system resources.

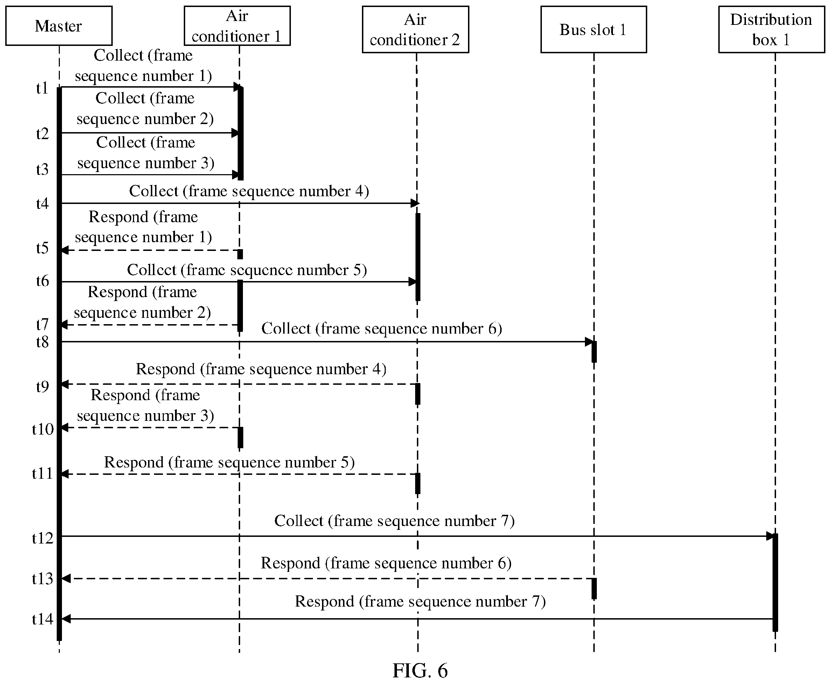

For example, with reference to FIG. 6, the plurality of slaves include an air conditioner 1, an air conditioner 2, a bus slot 1, and a distribution box 1. The master sends data request packets respectively carrying frame sequence numbers 1, 2, and 3 to the air conditioner 1 respectively at moments t1, t2, and t3; sends a data request packet carrying a frame sequence number 4 to the air conditioner 2 at a moment t4; receives, at a moment t5, a data response packet that carries the frame sequence number 1 and that is responded by the air conditioner 1; sends a data request packet carrying a frame sequence number 5 to the air conditioner 2 at a moment t6; receives, at a moment t7, a data response packet that carries the frame sequence number 2 and that is responded by the air conditioner 1; sends a data request packet carrying a frame sequence number 6 to the bus slot 1 at a moment t8; receives, at a moment t9, a data response packet that carries the frame sequence number 4 and that is responded by the air conditioner 2; receives, at a moment t10, a data response packet that carries the frame sequence number 3 and that is responded by the air conditioner 1; receives, at a moment t11, a data response packet that carries the frame sequence number 5 and that is responded by the air conditioner 2; sends a data request packet carrying a frame sequence number 7 to the distribution box 1 at a moment t12; receives, at a moment t13, a data response packet that carries the frame sequence number 6 and that is responded by the bus slot 1; and receives, at a moment t14, a data response packet that carries the frame sequence number 7 and that is responded by the distribution box 1.

As can be seen from FIG. 6, the multiple-question-to-multiple-answer manner is used between the master and the slave, the master does not need to wait for a response from one slave before requesting another slave, and the slave does not need to immediately answer a request from the master. When a real-time requirement of a corresponding service is low, the slave responds the master at an idle time, which does not affect another service of the slave. In addition, the data of the corresponding slave is completely collected at multiple-time interaction between the master and the slave, as shown in FIG. 6, between the master and the air conditioner 1, and between the master and the air conditioner 2. Alternatively, the data of the corresponding slave is completely collected at one-time interaction between the master and the slave, as shown in FIG. 6, between the master and the bus slot 1, and between the master and the distribution box 1.

In conclusion, in this embodiment of this application, one or more pieces of block data can be collected at one-time interaction between the master and the slave, and a maximum amount of data carried in each piece of block data is 256. In the Modbus system, one piece of data is represented in a minimum of 1 byte, so that the data carried in each piece of block data is a maximum of 256 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved.

FIG. 7 is a schematic diagram of a structure of a data collection apparatus according to an embodiment of this application. Optionally, the data collection apparatus 700 is implemented, by using software, hardware, or a combination thereof, as a master included in a Modbus system. The Modbus system further includes a plurality of slaves. With reference to FIG. 7, the apparatus 700 includes a sending module 701 and a receiving module 702.

The sending module 701 is configured to send a data request packet to a first slave, where the data request packet carries one or more pieces of block collection indication information, each of the one or more pieces of block collection indication information is used to indicate data that needs to be collected by the master from the first slave, and the first slave is one of the plurality of slaves. For a specific implementation, refer to detailed descriptions of step 301 in the embodiment in FIG. 3. Details are not described herein again.

The receiving module 702 is configured to receive a data response packet sent by the first slave, where the data response packet carries one or more pieces of block data, the one or more pieces of block data are data provided by the first slave in response to the one or more pieces of block collection indication information, and an amount of data carried in each of the one or more pieces of block data is greater than 0 and is less than or equal to 256. For a specific implementation, refer to detailed descriptions of steps 303 to 305 in the embodiment in FIG. 3. Details are not described herein again.

The apparatus 700 further includes:
a determining module, configured to determine the one or more pieces of block collection indication information based on an address distribution feature of to-be-collected data of the first slave. For a specific implementation, refer to related descriptions of step 301 in the embodiment in FIG. 3. Details are not described herein again.

Each of the one or more pieces of block collection indication information includes one start address and one data amount.

Each of the one or more pieces of block data includes one start address, one data amount, and first data, and the first data is data that is read by the first slave based on corresponding block collection indication information.

The data request packet includes a first address field, a first function field, and a first data field, the first address field carries an address of the first slave, the first function field carries a first function code, the first data field carries the one or more pieces of block collection indication information, and the first function code is used to indicate the master to request the first slave to execute a data collection function.

The data response packet includes a second address field, a second function field, and a second data field, the second address field carries the address of the first slave, the second function field carries a second function code, the second data field carries the one or more pieces of block data, and the second function code is used to indicate a function actually executed by the first slave. For specific implementations of the data request packet and the data response packet, refer to related descriptions of steps 301 to 305 in the embodiment in FIG. 3. Details are not described herein again.

The first data field further carries a first frame sequence number, and the second data field further carries a second frame sequence number. The first frame sequence number and the second frame sequence number are used by the master to perform frame matching between the data request packet and the data response packet.

The first data field further carries a block request quantity, and the block request quantity is used to indicate a block quantity of data that the master requests the first slave to collect by block.

The second data field further carries a block response quantity, and the block response quantity is used to indicate a block quantity of data actually collected by block by the first slave.

The master sends a corresponding data request packet to each of the plurality of slaves at a same moment to complete one round of collection; or
the master sequentially sends a corresponding data request packet to each of the plurality of slaves based on a polling sequence to complete one round of collection; or
the master determines, based on a data amount of to-be-collected data of each of the plurality of slaves, a collection duration corresponding to a corresponding slave, and the master sends a corresponding data request packet to each of the plurality of slaves based on the collection duration corresponding to each slave of the plurality of slaves.

For a specific implementation of interaction between the master and the plurality of slaves, refer to related descriptions of step 305 in the embodiment in FIG. 3 and related descriptions in FIG. 5 and FIG. 6. Details are not described herein again.

In this embodiment of this application, one or more pieces of block data can be collected at one-time interaction between the master and the slave, and a maximum amount of data carried in each piece of block data is 256. In the Modbus system, one piece of data is represented in a minimum of 1 byte, so that the data carried in each piece of block data is a maximum of 256 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved.

It may be noted that when the data collection apparatus provided by the foregoing embodiments is performing data collection, only division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. In addition, the data collection apparatus provided in the foregoing embodiment belongs to a same concept as the data collection method embodiment. For a specific implementation process of the data collection apparatus, refer to the method embodiment. Details are not described herein again.

FIG. 8 is a schematic diagram of a structure of another data collection apparatus according to an embodiment of this application. Optionally, the data collection apparatus 800 is implemented, by using software, hardware, or a combination thereof, as a first slave included in a Modbus system. The first slave is one of a plurality of slaves included in the Modbus system. The Modbus system further includes a master. With reference to FIG. 8, the apparatus 800 includes a receiving module 801, a determining module 802, and a sending module 803.

The receiving module 801 is configured to receive a data request packet sent by the master, where the data request packet carries one or more pieces of block collection indication information, and each of the one or more pieces of block collection indication information is used to indicate data that needs to be collected by the master from the first slave. For a specific implementation, refer to detailed descriptions of step 301 and step 302 in the embodiment in FIG. 3. Details are not described herein again.

The determining module 802 is configured to determine one or more pieces of block data based on the one or more pieces of block collection indication information. For a specific implementation, refer to detailed descriptions of step 303 in the embodiment in FIG. 3. Details are not described herein again.

The sending module 803 is configured to send a data response packet to the master, where the data response packet carries the one or more pieces of block data, and an amount of data carried in each of the one or more pieces of block data is greater than 0 and is less than or equal to 256. For a specific implementation, refer to detailed descriptions of steps 303 to 305 in the embodiment in FIG. 3. Details are not described herein again.

Each of the one or more pieces of block collection indication information includes one start address and one data amount.

The determining module 802 includes:
a read submodule, configured to successively read data of a first data amount from a first start address to obtain first data, where the first start address is a start address included in first block collection indication information, the first data amount is a data amount included in the first block collection indication information, and the first block collection indication information is one of the one or more pieces of block collection indication information; and
a determining submodule, configured to use the first start address, the first data amount, and the first data as one piece of block data. For a specific implementation, refer to related descriptions of step 303 in the embodiment in FIG. 3. Details are not described herein again.

In this embodiment of this application, one or more pieces of block data can be collected at one-time interaction between the master and the slave, and a maximum amount of data carried in each piece of block data is 256. In the Modbus system, one piece of data is represented in a minimum of 1 byte, so that the data carried in each piece of block data is a maximum of 256 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved.

It may be noted that when the data collection apparatus provided by the foregoing embodiments is performing data collection, only division of the foregoing functional modules is taken as an example for illustration. In actual application, the foregoing functions can be allocated to different functional modules and implemented according to a requirement, that is, an inner structure of an apparatus is divided into different functional modules to implement all or some of the functions described above. In addition, the data collection apparatus provided in the foregoing embodiment belongs to a same concept as the data collection method embodiment. For a specific implementation process of the data collection apparatus, refer to the method embodiment. Details are not described herein again.

An embodiment of this application provides a Modbus system, the Modbus system includes a master and a plurality of slaves, and a first slave is one of the plurality of slaves. The master and the first slave have corresponding functions of implementing the data collection method provided in the foregoing embodiments, to implement data collection by using the Modbus system. For a specific implementation, refer to detailed descriptions in the embodiment in FIG. 3. Details are not described herein again.

In this embodiment of this application, one or more pieces of block data can be collected at one-time interaction between the master and the slave, and a maximum amount of data carried in each piece of block data is 256. In the Modbus system, one piece of data is represented in a minimum of 1 byte, so that the data carried in each piece of block data is a maximum of 256 bytes. If a plurality of pieces of block data can be collected at one-time interaction, an amount of the data that can be collected is much larger than 252 bytes limited in a protocol. That is, in this solution, a larger amount of data can be collected at one-time interaction between the master and the slave. When an amount of data that needs to be collected is specified, a quantity of times of interaction between the master and the slave can be reduced. In this way, an occupation frequency of a bus decreases but an occupation rate increases, and communication efficiency is improved. In addition, because the slave provides more data at one-time response, the master does not spend a long time on one slave. Therefore, real-time performance of the entire Modbus system is improved.

It should be noted that the Modbus system provided in the foregoing embodiment belongs to a same concept as the data collection method embodiment. For a specific implementation process of the Modbus system, refer to the method embodiment. Details are not described herein again.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state drive (SSD)), or the like. It should be noted that the computer-readable storage medium provided in this embodiment of this application may be a non-volatile storage medium, that is, may be a non-transitory storage medium.

A person of ordinary skill in the art may understand that all or some of the steps of the foregoing embodiments may be implemented by hardware or a program instructing related hardware. The program may be stored in a computer-readable storage medium. The storage medium may be a read-only memory, a magnetic disk, a compact disc, or the like.

## Claims

1. A data collection method, wherein the data collection method is performed by a master (101) of a Modbus system, the Modbus system further comprising a plurality of slaves (102), said method comprising the steps of
sending (301, 302), by the master (101), a data request packet to a first slave (102), wherein the data request packet carries one or more pieces of block collection indication information, each of the one or more pieces of block collection indication information is used to indicate data blocks that needs to be collected by the master from the first slave (102); and
receiving (304, 305), by the master (101), a data response packet sent by the first slave (102), wherein the data response packet carries one or more data blocks provided by the first slave (102) in response to the one or more pieces of block collection indication information, and an amount of data carried in each of the one or more data blocks is greater than 0 and is less than or equal to 256 bytes;
wherein each of the one or more pieces of block collection indication information comprises one start address and one data amount; and
each of the one or more data blocks comprises one start address, one data amount, and first data, wherein the first data is data that is read by the first slave (102) in response to the corresponding piece of block collection indication information.

2. The method according to claim 1, Z which before the step of sending (301), by the master (101), a data request packet to a first
slave (102), further comprises a step of :
determining, by the master (101), the one or more pieces of block collection indication information based on an address distribution feature of to-be-collected data of the first slave (102) to indicate the master to determine the one or more pieces of block collection indication information.

3. The method according to any one of claims 1 to 2, wherein the data request packet comprises a first address field,
a first function field, and a first data field, wherein the first address field carries an address of the first slave (102), the first function field carries a first function code, the first data field carries the one or more pieces of block collection indication information, and wherein the first function code is used to indicate the master (101) to request the first slave (102) to execute a data collection function; and wherein
the data response packet comprises a second address field, a second function field, and a second data field, wherein the second address field carries the address of the first slave (102), the second function field carries a second function code, the second data field carries the one or more data blocks, and wherein the second function code is used to indicate a function actually executed by the first slave (102).

4. The method according to claim 3, wherein the first data field further carries a first frame sequence number, the second data field further carries a second frame sequence number, wherein the first frame sequence number and the second frame sequence number are used by the master (101) to perform frame matching between the data request packet and the data response packet.

5. The method according to claim 3 or 4, wherein the first data field further carries a block request quantity, and the block request quantity is used to indicate a block quantity of data that the master (101) requests the first slave (102) to collect by block; and wherein the second data field further carries a block response quantity, and the block response quantity is used to indicate a block quantity of data actually collected by block by the first slave (102).

6. The method according to any one of claims 1 to 5, wherein the method further comprises the steps of:
sending (301), by the master (101), a data request packets to each of the plurality of slaves (102) at a same moment to complete one round of collection; or
sequentially sending (301), by the master (101), data request packets to each of the plurality of slaves (102) based on a polling sequence to complete one round of collection; or
determining, by the master (101) based on a data amount of to-be-collected data of each of the plurality of slaves (102), a collection duration corresponding to the corresponding slave (102), and sending, by the master (101), data request packets to each of the plurality of slaves (102) based on the collection duration corresponding to each slave (102) of the plurality of slaves (102).

7. A data collection method, wherein the data collection method is performed by a first slave (102) of a Modbus system, the first slave (102) is one of a plurality of slaves (102) comprised in the Modbus system, the Modbus system further comprising a master, said method comprising the steps of:
receiving (301, 302), by the first slave (102), a data request packet sent by the master (101), wherein the data request packet carries one or more pieces of block collection indication information, each of the one or more pieces of block collection indication information is used to indicate a data block that needs to be collected by the master (101) from the first slave (102);
determining (303), by the first slave (102), the data blocks based on the one or more pieces of block collection indication information; and
sending (304, 305), by the first slave (102), a data response packet to the master (101), wherein the data response packet carries the one or more data blocks, and an amount of data carried in each of the one or more data blocks is greater than 0 and is less than or equal to 256 bytes;
wherein each of the one or more pieces of block collection indication information comprises one start address and one data amount; and
the determining, by the first slave (102), one or more data blocks based on the one or more pieces of block collection indication information comprises:
continuously reading (303), by the first slave (102), data of a first data amount from a first start address to obtain first data, wherein the first start address is a start address comprised in first block collection indication information, the first data amount is a data amount comprised in the first block collection indication information, and the first block collection indication information is one of the one or more pieces of block collection indication information; and
using (303), by the first slave (102), the first start address, the first data amount, and the first data as one data blocks.

8. A data collection apparatus comprising a memory and a processor, wherein
the memory is configured to store a computer program; and
the processor which, when executing said computer program, cause said data collection apparatus to perform all the steps of a method according to any one of claims 1 to 6.

9. A data collection apparatus comprising a processor and a memory, wherein
the memory is configured to store a computer program; and
the processor which, when executing said computer program, cause said data collection apparatus to perform all the steps of a method according to claim 7.

10. A Modbus system, wherein the system comprises a master (101) and a plurality of slaves (102), and a first slave (102) is one of the plurality of slaves (102);
the master (101) is configured to implement all the steps of a method according to any one of claims 1 to 6; and
the first slave (102) is configured to implement all the steps of the method according to claim 7.

11. A computer-readable storage medium, wherein the storage medium stores a computer program, which, when executed by a processor of a data collection apparatus according to claim 8. or, respectively, according to claim 9, cause said respective apparatus to implement either all the corresponding steps of a method according to any one of claims 1 to 6, or, respectively, all the corresponding steps of the method according to claim 7.

## Patentansprüche

1. Datensammelverfahren, wobei das Datensammelverfahren von einem Client (101) eines Modbus-Systems ausgeführt wird, wobei das Modbus-System ferner eine Vielzahl von Servern (102) umfasst, wobei das Verfahren die folgenden Schritte umfasst:
Senden (301, 302), durch den Client (101), eines Datenanforderungspakets an einen ersten Server (102), wobei das Datenanforderungspaket ein oder mehrere Elemente von Block-Sammelanzeigeinformationen trägt, wobei jedes der einen oder mehreren Elemente von Block-Sammelanzeigeinformationen verwendet wird, um Datenblöcke anzuzeigen, die vom Client von dem ersten Server (102) zu sammeln sind; und
Empfangen (304, 305), durch den Client (101), eines Datenantwortpakets, das von dem ersten Server (102) gesendet wird, wobei das Datenantwortpaket ein oder mehrere Datenblöcke trägt, die von dem ersten Server (102) als Reaktion auf das eine oder die mehreren Elemente von Block-Sammelanzeigeinformationen bereitgestellt werden, und wobei eine Datenmenge, die in jedem der einen oder mehreren Datenblöcke enthalten ist, größer als 0 und kleiner oder gleich 256 Byte ist;
wobei jedes der einen oder mehreren Elemente von Block-Sammelanzeigeinformationen eine Startadresse und eine Datenmenge umfasst; und jeder der einen oder mehreren Datenblöcke eine Startadresse, eine Datenmenge und erste Daten umfasst, wobei die ersten Daten Daten sind, die von dem ersten Server (102) als Reaktion auf das entsprechende Element der Block-Sammelanzeigeinformationen gelesen werden.

2. Verfahren nach Anspruch 1, welches vor dem Schritt des Sendens (301) eines Datenanforderungspakets durch den Client (101) an einen ersten Server (102) ferner den folgenden Schritt umfasst:
Bestimmen, durch den Client (101), der einen oder mehreren Block-Sammelanzeigeinformationen basierend auf einem Adressverteilungsmerkmal von zu sammelnden Daten des ersten Servers (102), um den Client anzuzeigen, das eine oder die mehreren Elemente von Block-Sammelanzeigeinformationen zu bestimmen.

3. Verfahren nach einem der Ansprüche 1 bis 2, wobei das Datenanforderungspaket ein erstes Adressfeld, ein erstes Funktionsfeld und ein erstes Datenfeld umfasst, wobei das erste Adressfeld eine Adresse des ersten Servers (102) trägt, das erste Funktionsfeld einen ersten Funktionscode trägt, das erste Datenfeld das eine oder die mehreren Elemente von Block-Sammelanzeigeinformationen trägt, und wobei der erste Funktionscode verwendet wird, um den Client (101) zu veranlassen, den ersten Server (102) zur Ausführung einer Datensammelfunktion aufzufordern; und wobei das Datenantwortpaket ein zweites Adressfeld, ein zweites Funktionsfeld und ein zweites Datenfeld umfasst, wobei das zweite Adressfeld die Adresse des ersten Servers (102) trägt, das zweite Funktionsfeld einen zweiten Funktionscode trägt, das zweite Datenfeld die einen oder mehreren Datenblöcke trägt, und wobei der zweite Funktionscode verwendet wird, um eine tatsächlich von dem ersten Server (102) ausgeführte Funktion anzuzeigen.

4. Verfahren nach Anspruch 3, wobei das erste Datenfeld ferner eine erste Rahmensequenznummer trägt, das zweite Datenfeld ferner eine zweite Rahmensequenznummer trägt, wobei
die erste Rahmensequenznummer und die zweite Rahmensequenznummer vom Client (101) verwendet werden, um eine Rahmenzuordnung zwischen dem Datenanforderungspaket und dem Datenantwortpaket durchzuführen.

5. Verfahren nach Anspruch 3 oder 4, wobei das erste Datenfeld ferner eine Blockanforderungsmenge trägt und die Blockanforderungsmenge dazu verwendet wird, eine Blockmenge von Daten anzuzeigen, die der Client (101) den ersten Server (102) auffordert, blockweise zu sammeln, und wobei
das zweite Datenfeld ferner eine Blockantwortmenge trägt und die Blockantwortmenge dazu verwendet wird, eine Blockmenge von Daten anzuzeigen, die tatsächlich blockweise von dem ersten Server (102) gesammelt wurde.

6. Verfahren nach einem der Ansprüche 1 bis 5, wobei das Verfahren ferner die folgenden Schritte umfasst:
Senden (301), durch den Client (101), von Datenanforderungspaketen gleichzeitig an jeden der Vielzahl von Servern (102), um eine Sammelrunde abzuschließen; oder
sequenzielles Senden (301), durch den Client (101), von Datenanforderungspaketen an jeden der Vielzahl von Servern (102) basierend auf einer Abfragereihenfolge, um eine Sammelrunde abzuschließen; oder
Bestimmen, durch den Client (101), einer Sammeldauer für den jeweiligen Server (102) basierend auf einer Datenmenge von jedem der Vielzahl von Servern (102) zu sammelnden Daten, und Senden, durch den Client (101), von Datenanforderungspaketen an jeden der Vielzahl von Servern (102) basierend auf der jeweiligen Sammeldauer des jeweiligen Servers (102) der Vielzahl von Servern (102).

7. Datensammelverfahren, wobei das Datensammelverfahren von einem ersten Server (102) eines Modbus-Systems ausgeführt wird, wobei der erste Server (102) einer von einer Vielzahl von Servern (102) ist, die in dem Modbus-System enthalten sind, und wobei das Modbus-System ferner einen Client umfasst, wobei das Verfahren die folgenden Schritte umfasst:
Empfangen (301, 302), durch den ersten Server (102), eines von dem Client (101) gesendeten Datenanforderungspakets, wobei das Datenanforderungspaket ein oder mehrere Elemente von Block-Sammelanzeigeinformationen trägt, wobei jedes der einen oder mehreren Elemente von Block-Sammelanzeigeinformationen verwendet wird, um einen Datenblock anzuzeigen, der vom Client (101) von dem ersten Server (102) zu sammeln ist; und
Bestimmen (303), durch den ersten Server (102), der Datenblöcke basierend auf dem einen oder den mehreren Elementen von Block-Sammelanzeigeinformationen; und Senden (304, 305), durch den ersten Server (102), eines Datenantwortpakets an den Client (101), wobei das Datenantwortpaket den einen oder die mehreren Datenblöcke trägt, und wobei eine Datenmenge, die in jedem der ein oder mehreren Datenblöcke enthalten ist, größer als 0 und kleiner oder gleich 256 Byte ist,
wobei jedes der einen oder mehreren Elemente von Block-Sammelanzeigeinformationen eine Startadresse und eine Datenmenge umfasst; und
das Bestimmen, durch den ersten Server (102), des einen oder der mehreren Datenblöcke basierend auf dem einen oder den mehreren Elementen von Block-Sammelanzeigeinformationen umfasst:
fortlaufendes Lesen (303), durch den ersten Server (102), von Daten einer ersten Datenmenge von einer ersten Startadresse, um erste Daten zu erhalten, wobei die erste Startadresse eine in einer ersten Block-Sammelanzeigeinformation enthaltene Startadresse ist, die erste Datenmenge eine in der ersten Block-Sammelanzeigeinformation enthaltene Datenmenge ist und die erste Block-Sammelanzeigeinformation eines der einen oder mehreren Elemente von Block-Sammelanzeigeinformationen ist; und
Verwenden (303), durch den ersten Server (102), der ersten Startadresse, der ersten Datenmenge und der ersten Daten als einen Datenblock.

8. Datensammelvorrichtung, umfassend
einen Speicher und einen Prozessor, wobei
der Speicher konfiguriert ist, um ein Computerprogramm zu speichern; und
der Prozessor bei Ausführung des Computerprogramms die Datensammelvorrichtung veranlasst, alle Schritte des Verfahrens nach einem der Ansprüche 1 bis 6 durchzuführen.

9. Datensammelvorrichtung, umfassend einen Prozessor und einen Speicher, wobei der Speicher konfiguriert ist, um ein Computerprogramm zu speichern; und
der Prozessor bei Ausführung des Computerprogramms die Datensammelvorrichtung veranlasst, alle Schritte des Verfahrens nach Anspruch 7 durchzuführen.

10. Modbus-System, wobei das System einen Client (101) und eine Vielzahl von Servern (102) umfasst und ein erster Server (102) einer der Vielzahl von Servern (102) ist; wobei der Client (101) dazu konfiguriert ist, alle Schritte eines Verfahrens nach einem der Ansprüche 1 bis 6 durchzuführen, und der erste Server (102) dazu konfiguriert ist, alle Schritte des Verfahrens nach Anspruch 7 durchzuführen.

11. Computerlesbares Speichermedium, wobei das Speichermedium ein Computerprogramm speichert, das bei Ausführung durch einen Prozessor einer Datensammelvorrichtung nach Anspruch 8 bzw. nach Anspruch 9 die jeweilige Vorrichtung veranlasst, entweder alle entsprechenden Schritte eines Verfahrens nach einem der Ansprüche 1 bis 6 bzw. alle entsprechenden Schritte des Verfahrens nach Anspruch 7 zu implementieren.

## Revendications

1. Procédé de collecte de données, le procédé de collecte de données étant exécuté par un maître (101) d'un système Modbus, le système Modbus comprenant en outre une pluralité d'esclaves (102), ledit procédé comprenant les étapes suivantes :
envoyer (301, 302), par le maître (101), un paquet de demande de données à un premier esclave (102), le paquet de demande de données transportant un ou plusieurs éléments d'informations d'indication de collecte de blocs, chacun des un ou plusieurs éléments d'informations d'indication de collecte de blocs étant utilisé pour indiquer des blocs de données qui doivent être collectés par le maître à partir du premier esclave (102) ; et
recevoir (304, 305), par le maître (101), un paquet de réponse de données envoyé par le premier esclave (102), le paquet de réponse de données transportant un ou plusieurs blocs de données fournis par le premier esclave (102) en réponse aux un ou plusieurs éléments d'informations d'indication de collecte de blocs, et une quantité de données transportées dans chacun des un ou plusieurs blocs de données étant supérieure à 0 et inférieure ou égale à 256 octets ;
chacun des un ou plusieurs éléments d'informations d'indication de collecte de blocs comprenant une adresse de début et une quantité de données ; et
chacun des un ou plusieurs blocs de données comprenant une adresse de début, une quantité de données et des premières données, les premières données étant des données qui sont lues par le premier esclave (102) en réponse à l'élément d'informations d'indication de collecte de blocs correspondant.

2. Procédé selon la revendication 1 qui, avant l'étape d'envoi (301), par le maître (101), d'un paquet de demande de données à un premier esclave (102), comprend en outre une étape consistant à :
déterminer, par le maître (101), les un ou plusieurs éléments d'informations d'indication de collecte de blocs sur la base d'une caractéristique de distribution d'adresses des données à collecter du premier esclave (102) afin d'indiquer au maître de déterminer les un ou plusieurs éléments d'informations d'indication de collecte de blocs.

3. Procédé selon l'une quelconque des revendications 1 et 2, dans lequel le paquet de demande de données comprend un premier champ d'adresse, un premier champ de fonction et un premier champ de données, le premier champ d'adresse transportant une adresse du premier esclave (102), le premier champ de fonction transportant un premier code de fonction, le premier champ de données transportant les un ou plusieurs éléments d'informations d'indication de collecte de blocs, et le premier code de fonction étant utilisé pour indiquer au maître (101) de demander au premier esclave (102) d'exécuter une fonction de collecte de données ; et le paquet de réponse de données comprenant un deuxième champ d'adresse, un deuxième champ de fonction et un deuxième champ de données, le deuxième champ d'adresse transportant l'adresse du premier esclave (102), le deuxième champ de fonction transportant un deuxième code de fonction, le deuxième champ de données transportant les un ou plusieurs blocs de données, et le deuxième code de fonction étant utilisé pour indiquer une fonction effectivement exécutée par le premier esclave (102).

4. Procédé selon la revendication 3, dans lequel le premier champ de données transporte en outre un premier numéro de séquence de trame, le deuxième champ de données transporte en outre un deuxième numéro de séquence de trame, le premier numéro de séquence de trame et le deuxième numéro de séquence de trame étant utilisés par le maître (101) pour effectuer une correspondance de trame entre le paquet de demande de données et le paquet de réponse de données.

5. Procédé selon la revendication 3 ou 4, dans lequel le premier champ de données transporte en outre une quantité de demande de blocs, et la quantité de demande de blocs est utilisée pour indiquer une quantité de blocs de données que le maître (101) demande au premier esclave (102) de collecter par bloc ; et
le deuxième champ de données transportant en outre une quantité de réponses de blocs, et la quantité de réponses de blocs étant utilisée pour indiquer une quantité de blocs de données effectivement collectée par bloc par le premier esclave (102).

6. Procédé selon l'une quelconque des revendications 1 à 5, dans lequel le procédé comprend en outre les étapes consistant à :
envoyer (301), par le maître (101), un paquet de demande de données à chaque esclave de la pluralité d'esclaves (102) au même moment pour terminer un cycle de collecte ; ou
envoyer (301) séquentiellement, par le maître (101), des paquets de demande de données à chaque esclave de la pluralité d'esclaves (102) sur la base d'une séquence d'interrogation pour terminer un cycle de collecte ; ou
déterminer, par le maître (101), sur la base d'une quantité de données à collecter de chaque esclave de la pluralité d'esclaves (102), une durée de collecte correspondant à l'esclave correspondant (102), et envoyer, par le maître (101), des paquets de demande de données à chaque esclave de la pluralité d'esclaves (102) sur la base de la durée de collecte correspondant à chaque esclave (102) de la pluralité d'esclaves (102).

7. Procédé de collecte de données, le procédé de collecte de données étant exécuté par un premier esclave (102) d'un système Modbus, le premier esclave (102) étant l'un d'une pluralité d'esclaves (102) compris dans le système Modbus, le système Modbus comprenant en outre un maître, ledit procédé comprenant les étapes suivantes :
recevoir (301, 302), par le premier esclave (102), un paquet de demande de données envoyé par le maître (101), le paquet de demande de données transportant un ou plusieurs éléments d'informations d'indication de collecte de blocs, chacun des un ou plusieurs éléments d'informations d'indication de collecte de blocs étant utilisé pour indiquer un bloc de données qui doit être collecté par le maître (101) à partir du premier esclave (102) ;
déterminer (303), par le premier esclave (102), les blocs de données sur la base des un ou plusieurs éléments d'informations d'indication de collecte de blocs ; et
envoyer (304, 305), par le premier esclave (102), un paquet de réponse de données au maître (101), le paquet de réponse de données transportant les un ou plusieurs blocs de données, et une quantité de données transportées dans chacun des un ou plusieurs blocs de données est supérieure à 0 et inférieure ou égale à 256 octets ;
chacun des un ou plusieurs éléments d'informations d'indication de collecte de blocs comprenant une adresse de début et une quantité de données ; et
la détermination, par le premier esclave (102), d'un ou plusieurs blocs de données sur la base des un ou plusieurs éléments d'informations d'indication de collecte de blocs comprenant les étapes suivantes :
lire de manière continue (303), par le premier esclave (102), des données d'une première quantité de données à partir d'une première adresse de départ pour obtenir des premières données, la première adresse de départ étant une adresse de départ comprise dans des premières informations d'indication de collecte de blocs, la première quantité de données étant une quantité de données comprise dans les premières informations d'indication de collecte de blocs, et les premières informations d'indication de collecte de blocs étant l'un des un ou plusieurs éléments d'informations d'indication de collecte de blocs ; et
utiliser (303), par le premier esclave (102), la première adresse de départ, la première quantité de données et les premières données comme un bloc de données.

8. Appareil de collecte de données comprenant une mémoire et un processeur, dans lequel :
la mémoire est configurée pour stocker un programme informatique ; et
le processeur, lors de l'exécution dudit programme informatique, amène ledit appareil de collecte de données à exécuter toutes les étapes d'un procédé selon l'une quelconque des revendications 1 à 6.

9. Appareil de collecte de données comprenant un processeur et une mémoire, dans lequel :
la mémoire est configurée pour stocker un programme informatique ; et
le processeur, lors de l'exécution dudit programme informatique, amène ledit appareil de collecte de données à exécuter toutes les étapes d'un procédé selon la revendication 7.

10. Système Modbus, le système comprenant un maître (101) et une pluralité d'esclaves (102), et un premier esclave (102) étant l'un de la pluralité d'esclaves (102) ;
le maître (101) étant configuré pour mettre en œuvre toutes les étapes d'un procédé selon l'une quelconque des revendications 1 à 6 ; et
le premier esclave (102) étant configuré pour mettre en œuvre toutes les étapes du procédé selon la revendication 7.

11. Support de stockage lisible par ordinateur, dans lequel le support de stockage stocke un programme informatique qui, lorsqu'il est exécuté par un processeur d'un appareil de collecte de données selon la revendication 8 ou, respectivement, selon la revendication 9, amène ledit appareil respectif à mettre en œuvre soit toutes les étapes correspondantes d'un procédé selon l'une quelconque des revendications 1 à 6, soit, respectivement, toutes les étapes correspondantes du procédé selon la revendication 7.
